# FASCICULE DE BREVET EUROPEEN

(11) **EP 2 590 856 B1**
(45) Date de publication et mention de la délivrance du brevet: **25.05.2016**
(21) Numéro de dépôt: 11738019.6
(22) Date de dépôt: 24.06.2011
(51) Int. Cl.: B64C 1/00, B29L 31/30, B29D 99/00, B29C 70/44, B29C 70/32, B64F 5/00, B64C 1/26

(54) **PROCEDE DE REALISATION D'UN CAISSON CENTRAL DE VOILURE**
VERFAHREN ZUR HERSTELLUNG EINES ZENTRALEN FLÜGELKASTENS
METHOD FOR PRODUCING A CENTRAL WING BOX

(30) Priorité: 09.07.2010 FR 1055615
(43) Date de publication de la demande: 15.05.2013
(73) Titulaire: Airbus Operations SAS, 31060 Toulouse (FR)
(72) Inventeur: BLOT, Philippe, F-44000 Nantes (FR); COLMAGRO, Jérôme, F-31500 Toulouse (FR); SOULA, Denis, F-31300 Toulouse (FR); GUILLEMAUT, Julien, F-31400 Toulouse (FR); LE HETET, Thomas, F-44118 La Chevroliere (FR); GUITTARD, Dominique, F-31400 Toulouse (FR)
(74) Mandataire: Fantin, Laurent
(86) Numéro de dépôt international: PCT/FR2011/051467
(87) Numéro de publication internationale: WO 2012/004490

(56) Documents cités:
- WO-A1-2008/121005
- WO-A2-2008/054499
- FR-A1- 2 915 173
- US-B1- 6 190 484

## Description

La présente invention se rapporte à un procédé de réalisation d'un caisson central de voilure.

Un tel procédé est connu de FR 2 915 173, qui est considéré comme l'art antérieur le plus proche.

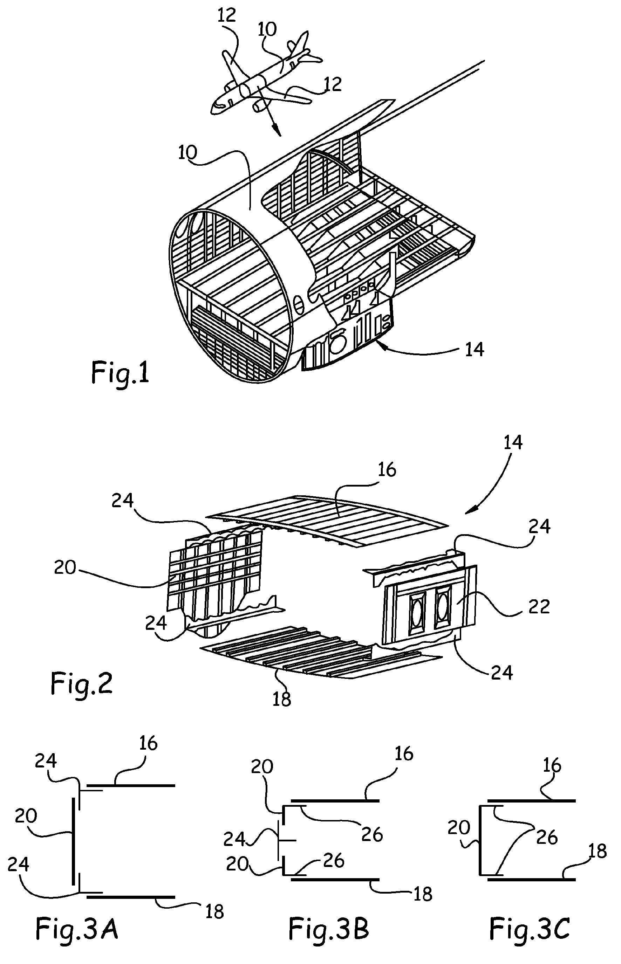

Comme illustré sur la figure 1, la structure d'un aéronef comprend deux sous-ensembles, d'une part un fuselage 10, et d'autre part une voilure 12 qui sont reliés par l'intermédiaire d'une structure 14 caissonnée appelée caisson central de voilure.

Comme illustré sur la figure 2, le caisson central de voilure 14 comprend d'une part deux panneaux, un panneau supérieur 16 et un panneau inférieur 18, et d'autre part, au minimum deux longerons, un longeron avant 20 et un longeron arrière 22.

De manière connue, ces quatre éléments sont réalisés séparément puis reliés entre eux, en utilisant des pièces intermédiaires 24 de type cornières, comme illustré sur les figures 2, 3A et 3B et/ou via de légères extensions 26 au niveau des panneaux ou des longerons de type bord tombé, comme illustré sur les figures 3B et 3C.

Dans tous les cas, il est nécessaire de prévoir au moins deux jonctions par longerons, soit au moins quatre jonctions pour le caisson central de voilure 14.

Dans le cas de pièces métalliques, chaque jonction nécessite une phase de mise en position des deux éléments à assembler, une phase de pré-assemblage, par exemple par épinglage, une phase de perçage/alésage, une phase de nettoyage des copeaux et une phase de rivetage de plusieurs rangées de fixation.

Ces opérations sont longues et impactent de manière conséquente le coût du caisson.

Dans le cas de panneaux et de longerons en matériau composite, le procédé de réalisation reprend les mêmes étapes que pour des éléments métalliques, la phase de perçage étant cependant encore plus longue et difficile en raison des risques d'écaillage.

Selon une autre problématique liée au matériau composite, le jeu entre les pièces à assembler doit être inférieur à 3/10 mm pour obtenir un contact entre les pièces permettant leur assemblage sans contraintes résiduelles de flexion. Cette contrainte nécessite une parfaite maîtrise des procédés de fabrication des pièces à assembler, notamment au niveau des surfaces de contact.

Cependant, il est nécessaire bien souvent de prévoir une étape supplémentaire consistant à interposer une résine de calage entre les deux pièces à assembler pour être dans la tolérance de contact.

Cette opération est longue car après avoir déposé la résine, les pièces doivent être assemblées temporairement pour calibrer l'épaisseur de la résine, puis dégroupées pour le séchage de la résine. L'assemblage final est réalisé seulement après le séchage de la résine.

Selon un autre point, l'assemblage par rivetage génère au niveau des bords des pièces à assembler des contraintes locales importantes qui nécessitent des surépaisseurs. Dans le cas de matériau composite, ces surépaisseurs sont plus importantes car les orientations des renforts fibreux doivent être optimales. Bien entendu, ces surépaisseurs augmentent la masse embarquée.

Aussi, la présente invention vise à pallier les inconvénients de l'art antérieur en proposant un procédé de réalisation d'un caisson de voilure en matériau composite permettant de réduire les temps de fabrication.

Selon un autre objectif, l'invention vise à limiter les défauts au niveau de la surface extérieure du caisson central de voilure.

A cet effet, l'invention a pour objet un procédé de réalisation d'un caisson central de voilure comportant un panneau supérieur, un panneau inférieur, un longeron avant et un longeron arrière, les bords supérieurs desdits longerons approximativement parallèles à un axe Y étant reliés par le panneau supérieur et les bords inférieurs desdits longerons approximativement parallèles à l'axe y étant reliés par le panneau inférieur, caractérisé en ce qu'il consiste à réaliser au moins un panneau et au moins un longeron en matériau composite d'un seul tenant. D'autres caractéristiques et avantages ressortiront de la description qui va suivre de l'invention, description donnée à titre d'exemple uniquement, en regard des dessins annexés sur lesquels :
- La figure 1 est une vue en perspective illustrant un tronçon central d'un aéronef,
- La figure 2 est une vue en perspective d'un caisson central de voilure selon l'art antérieur,
- Les figures 3A à 3C sont des schémas illustrant différentes variantes d'assemblage selon l'art antérieur,
- La figure 4 est une vue en perspective illustrant l'extérieur d'une partie d'un caisson central de voilure selon une variante de l'invention,
- La figure 5 est une vue en perspective illustrant l'intérieur de la partie du caisson central de voilure de la figure 4,
- La figure 6 est une vue de face d'un caisson central de voilure selon une autre variante de l'invention,
- La figure 7 est une coupe illustrant en détails une zone reliant un panneau et un longeron du caisson central de voilure de la figure 6,
- La figure 8 est une vue en perspective d'une autre variante d'un caisson central de voilure selon l'invention,
- La figure 9 est une vue en perspective d'un raidisseur destiné à un caisson central de voilure selon la variante illustrée sur la figure 8,
- La figure 10 est une coupe du raidisseur de la figure 9,
- La figure 11 est une coupe d'un raidisseur d'angle destiné à un caisson central de voilure selon la variante illustrée sur la figure 8,
- La figure 12 est une vue en perspective d'un dispositif assurant la dépose de renforts fibreux sur un mandrin de manière à obtenir un caisson central de voilure selon l'invention,
- La figure 13 est une coupe transversale d'un mandrin pour la réalisation d'un caisson central de voilure selon l'invention,
- La figure 14 est une vue latérale illustrant un dispositif permettant la mise en place d'une enveloppe étanche sur un mandrin,
- La figure 15 est une coupe transversale d'une zone reliant un panneau et un longeron d'un caisson central de voilure avant le compactage des renforts fibreux,
- La figure 16 est une coupe transversale du coin de la figure 15 après le compactage,
- La figure 17 est une coupe transversale illustrant l'agencement des renforts fibreux au niveau d'une zone reliant un panneau et un longeron d'un caisson central de voilure avant le compactage, et
- La figure 18 est une coupe transversale illustrant l'agencement des renforts fibreux au niveau d'une zone reliant un panneau et un longeron d'un caisson central de voilure après le compactage.

Pour la suite de la description, on considère que l'axe longitudinal (également appelé axe X) correspond à l'axe qui s'étend de la pointe avant au cône arrière de l'aéronef. Un plan transversal correspond à un plan perpendiculaire à l'axe longitudinal qui comprend l'axe Y (horizontal lorsque l'aéronef est au sol) et l'axe Z (vertical lorsque l'aéronef est au sol).

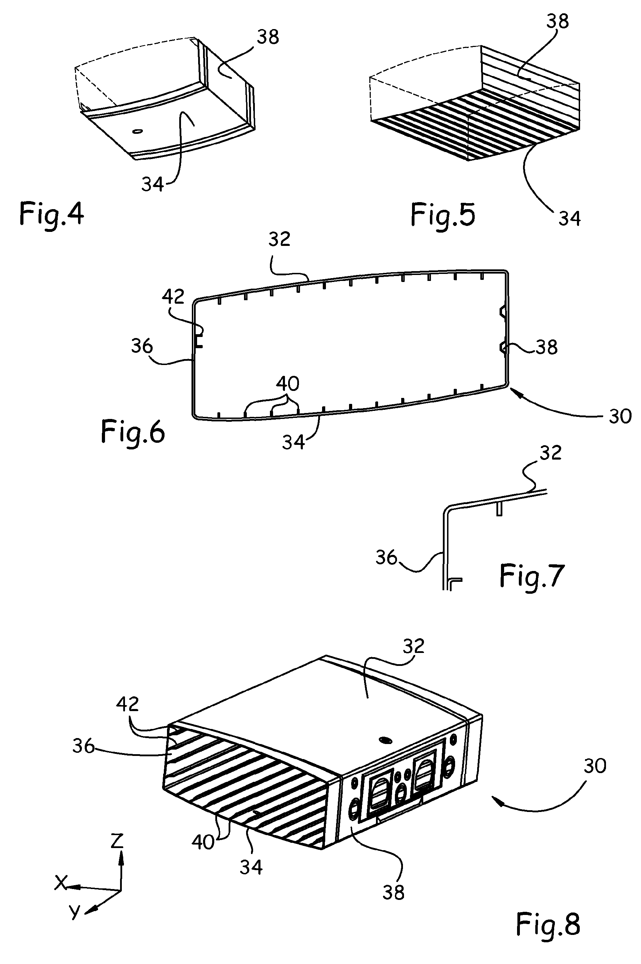

Sur la figure 8, on a représenté un caisson central de voilure 30 comportant un panneau supérieur 32, un panneau inférieur 34, un longeron avant 36 et un longeron arrière 38. Les longerons 36 et 38 sont sensiblement plans et disposés approximativement dans des plans transversaux. Ces longerons sont espacés et leurs bords supérieurs approximativement parallèles à l'axe y sont reliés par le panneau supérieur 32 alors que leurs bords inférieurs approximativement parallèles à l'axe y sont reliés par le panneau inférieur 34.

Les panneaux 32 et 34 ne sont généralement pas plans mais légèrement bombés. Pour la suite, l'axe du caisson correspond à l'axe Y. Une surface intérieure d'un longeron ou d'un panneau correspond à la surface dudit panneau ou dudit longeron orientée vers l'autre panneau ou longeron, la surface extérieure étant la surface opposée à la surface intérieure.

Les panneaux et les longerons ne sont pas sollicités de la même manière. Ainsi, les panneaux 32 et 34 supportent des efforts de compression et de traction selon l'axe Y et en flexion dans un plan XZ.

Afin de reprendre ces sollicitations, les panneaux 32, 34 comprennent au niveau de leur surfaces intérieures des raidisseurs 40 parallèles à l'axe Y.

Les longerons sont soumis à des efforts de traction et de compression selon l'axe Y et des efforts tranchants suivant une direction contenue dans un plan XZ.

Avantageusement, les longerons 36, 38 comprennent au niveau de leurs surfaces intérieures des raidisseurs 42 parallèles à l'axe Y.

Selon l'invention, le caisson central de voilure 30 comprend au moins un panneau et au moins un longeron réalisés en matériau composite d'un seul tenant.

Selon un mode de réalisation illustré sur les figures 4 et 5, le caisson central de voilure 30 comprend deux sous-ensembles comportant chacun un panneau et un longeron réalisés d'un seul tenant en matériau composite, les deux sous-ensembles étant reliés entre eux par deux interfaces. Ainsi, le longeron du premier sous ensemble est relié par une interface au panneau du second sous-ensemble alors que le longeron du second sous-ensemble est relié par une interface au panneau du premier sous-ensemble. Selon les cas, une interface peut se présenter sous forme d'un élément rapporté comme par exemple une cornière ou sous la forme d'un élément incorporé au longeron ou au panneau comme par exemple un bord tombé.

Selon un mode opératoire, les deux sous-ensembles sont obtenus à partir de préformes sèches disposées dans un moule dans lequel est injectée une résine liquide, l'ensemble étant ensuite au moins partiellement polymérisé. Selon un première variante, les deux sous-ensembles sont totalement polymérisés indépendamment l'un de l'autre puis sont assemblés avec les mêmes interfaces que l'art antérieur. Selon une autre variante, les deux sous-ensembles sont partiellement polymérisés, puis sont assemblés à l'état mi-cuit avant d'être totalement polymérisés. Cet assemblage peut être réalisé sur un mandrin avec un enroulement de renforts fibreux complémentaires comme cela sera détaillé ultérieurement.

Ainsi, selon l'invention chaque longeron comprend au maximum une interface. Cette solution permet de réduire le temps d'assemblage compte tenu de la réduction du nombre de pièce à assembler.

Selon ce mode de réalisation, les raidisseurs 42 peuvent être disposés sur les surfaces extérieures des longerons.

Selon un mode de réalisation préféré et illustré sur les figures 6 et 8, le caisson central de voilure 30 est réalisé d'un seul tenant.

Cette solution a pour avantage de supprimer toutes les interfaces et donc de réduire encore plus le temps d'assemblage puisque les longerons ne comprennent aucune interface.

Selon un autre aspect, cette solution a également pour avantage de réduire la masse embarquée, en ne comportant pas de zone de recouvrement (comme illustré sur la figure 7) pour assurer la jonction entre deux éléments comme dans le cas d'un bord tombé ou en ne prévoyant pas de zones de surépaisseur nécessaires pour la reprise des efforts locaux dans le cas de moyens de fixation tels que des rivets.

Selon une caractéristique de l'invention, le caisson central de voilure 30 est obtenu par enroulement d'au moins un renfort fibreux 44 autour de l'axe Y (correspondant à l'axe du caisson) sur un mandrin 46.

L'enroulement découle d'un mouvement de rotation relatif autour de l'axe Y entre le mandrin 46 et des moyens de dépose dudit renfort fibreux 44. Selon les cas, le mandrin peut pivoter autour de l'axe Y et/ou les moyens de dépose peuvent pivoter autour de l'axe Y.

Par renfort fibreux, on entend au moins une fibre, un ensemble de fibres ou une ou plusieurs mini nappes de fibres (avec une largeur inférieure à 15 mm).

A titre d'exemple, au cours de l'opération de dépose sur le mandrin plusieurs renforts fibreux sont déposés simultanément (jusqu'à 32 par exemple). Ces renforts fibreux étant indépendants entre eux, il est possible de les déposer sur des surfaces à double rayon de courbure.

Par enroulement, on entend que le renfort fibreux 44 s'étend sur au moins un longeron et un panneau et selon une direction contenue dans un plan sécant à l'axe Y.

La réalisation du caisson central peut découler de la dépose de nappes de fibres et/ou de la dépose de renforts fibreux selon l'axe Y et de l'enroulement de renforts fibreux 44 autour de l'axe Y.

Selon les cas, les nappes et les renforts fibreux peuvent être secs ou pré-imprégnés.

Pour assurer la reprise des efforts, au niveau des panneaux, les renforts fibreux seront orientés en majeures parties parallèlement à l'axe Y. Au niveau des longerons, ils seront orientés en partie parallèlement à l'axe Y et en partie suivant des orientations à +/- 45° pour supporter les contraintes de cisaillement.

Des renforts fibreux selon une direction contenue dans un plan sécant à l'axe Y seront prévus pour assurer la cohésion des panneaux et des longerons.

Certains plis selon la direction de l'axe Y au niveau des panneaux pourront être arrêtés et remplacés au niveau des longerons par des plis ayant d'autres directions.

Toutefois, les renforts avec des directions dans des plans sécants à l'axe Y seront majoritairement continus pour assurer la résistance et la cohésion du caisson central de voilure.

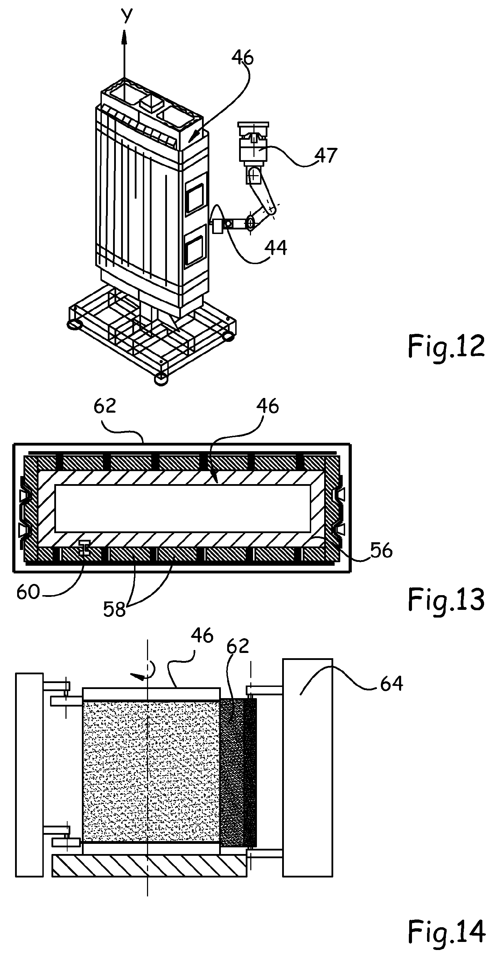

Pour la réalisation et la dépose des éléments fibreux, on peut utiliser une machine pour la dépose de bandes, notamment pour la dépose selon l'axe Y et/ou une machine 47 (visible sur la figure 12) pour la dépose de fibres, notamment pour l'enroulement autour du mandrin selon des directions dans des plans sécants à l'axe Y, par exemple à 90° et à +/- 45°.

En variante, on peut utiliser une machine pour la dépose de fibres à fort grammage, notamment selon la direction Y et une machine pour la dépose de fibres à faible grammage, notamment pour l'enroulement autour du mandrin selon des directions dans des plans sécants à l'axe Y, par exemple à 90°, +/- 45°.

Le mandrin 46 a des formes pour conformer les surfaces intérieures du caisson central de voilure.

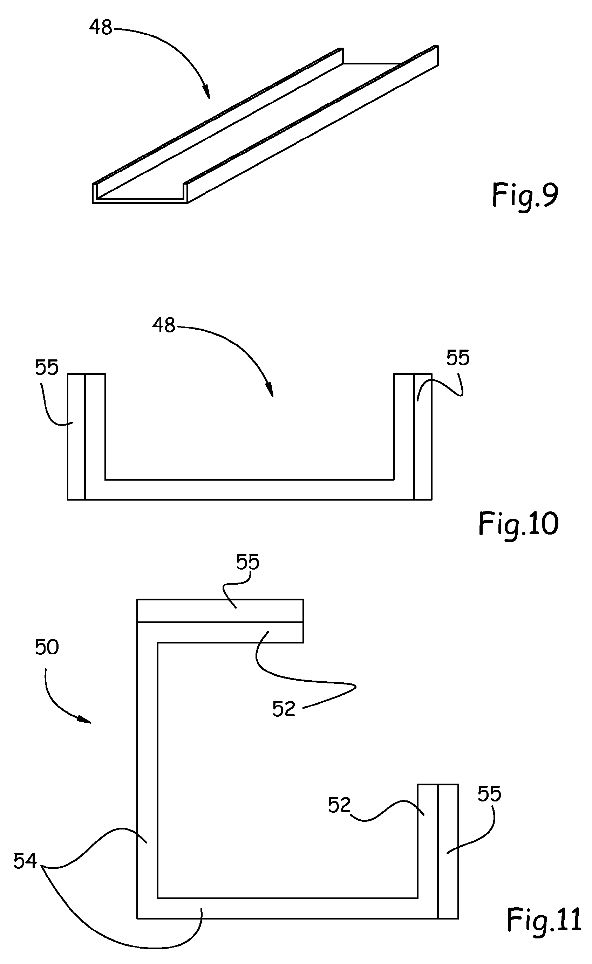

Selon un mode de réalisation illustré sur les figures 9 à 11, les raidisseurs 40 et 42 sont réalisés à partir de profilés 48 avec une section en U avec deux branches et une base susceptible d'être plaquée contre la surface intérieure d'un panneau ou d'un longeron. Les profilés sont accolés les uns aux autres de manière à ce que les deux branches accolées de deux profilés adjacents forment un raidisseur.

Les raidisseurs proches des zones reliant un panneau et un longeron peuvent être obtenus à partir d'un profilé 50, illustré sur la figure 11, qui comprend deux branches 52 reliées par une base 54 en forme de L.

Eventuellement, un élément appelé tête de clou peut être disposé au niveau de l'interstice qui apparait lorsque deux profilés 48, 50 sont accolés.

Sur les figures 10 et 11, on a représenté des raidisseurs avec de part et d'autre des demi-têtes de clou 55.

Lorsque le caisson central de voilure comprend des raidisseurs 40 et 42 parallèles à l'axe Y, le mandrin 46 comprend avantageusement plusieurs parties, un mandrin principal 56 et des parties amovibles appelées par la suite mandrins amovibles 58, comme illustré sur la figure 13. Les mandrins amovibles sont maintenus sur le mandrin principal par tous moyens appropriés comme par exemple des clés de fixation 60.

Selon un mode opératoire, les profilés peuvent être obtenus à partir de matériaux composites avec une matrice thermoplastique si la liaison (par soudage ou collage par exemple) est maîtrisée entre les raidisseurs et les panneaux ou les longerons.

Selon un autre mode opératoire, les profilés 48, 50 peuvent être réalisés à partir de matériaux fibreux pré-imprégnés et sont drappés sur les mandrins amovibles 58. Avantageusement, les profilés 48, 50 sont partiellement polymérisés de manière à limiter les variations dimensionnelles ultérieures desdits profilés 48, 50.

En suivant, les mandrins amovibles 58 sur lesquels sont disposés les profilés 48, 50 sont rapportés sur le mandrin principal 56. Enfin, les renforts fibreux formant les panneaux et les raidisseurs sont drappés et enroulés directement sur les raidisseurs 48 et 50.

Après la dépose des éléments fibreux, l'ensemble est recouvert par des systèmes de drainage et par une enveloppe étanche appelée également vessie 62. Avantageusement, le mandrin principal 56 est étanche et a une longueur supérieure à celle du caisson central de voilure et s'étend de part et d'autre de ce dernier de manière à offrir de part et d'autre une surface de contact à la vessie 62. Cet agencement permet de réduire les risques de fuites et par conséquent d'avoir un matériau défectueux après polymérisation.

Selon une première variante, les profilés, les longerons et les panneaux sont réalisés à partir d'éléments fibreux pré-imprégnés.

Selon une autre variante, ils sont réalisés à partir d'éléments fibreux secs. Dans ce cas, on injecte ou on infuse une résine dans l'enceinte délimitée par le mandrin principal 56 étanche et la vessie 62.

La vessie 62 peut être rapportée à l'aide d'une tête de dépose 64, illustrée sur la figure 14, permettant de banderoler la vessie 62 sur l'ensemble constitué par le mandrin principal, les mandrins amovibles, les raidisseurs, les panneaux et les longerons.

Enfin, cet ensemble est soumis à un cycle de polymérisation pour assurer la consolidation du caisson central de voilure.

Ce mode opératoire permet d'obtenir une très bonne géométrie au niveau des surfaces intérieures du caisson central de voilure ce qui facilite les opérations d'assemblage des éléments reliés au niveau desdites surfaces intérieures, comme des bielles par exemple.

Selon un mode de réalisation, les mandrins 56 et 58 sont métalliques ou en un matériau analogue de manière à ce que le retrait thermique des mandrins 56 et 58 après la polymérisation favorise le démoulage.

Les éventuelles surépaisseurs sont prévues au niveau des surfaces extérieures de manière à ce que les mandrins soient lisses et favorisent le démoulage.

Avantageusement, des tôles de lissage sont disposées entre les éléments formant le caisson central et la vessie 62 pour assurer un compactage efficace.

Selon une autre caractéristique de l'invention, au moins une tôle de lissage comprend au moins deux parties reliées par une articulation autorisant un mouvement de rotation relatif entre lesdites deux parties selon un axe de rotation parallèle à l'axe Y. Cette configuration permet d'exercer une pression constante au niveau du rayon de courbure reliant un panneau et un longeron.

Cette articulation peut être une charnière ou découler de la souplesse du matériau de la tôle de lissage au niveau de l'articulation.

Au niveau d'au moins un rayon de courbure reliant un panneau et un longeron, le mandrin 46 comprend des moyens 66 pour l'expanser au niveau d'au moins un rayon de courbure de manière à accroitre le périmètre dudit mandrin lors du compactage des renforts fibreux constituant le caisson central de voilure.

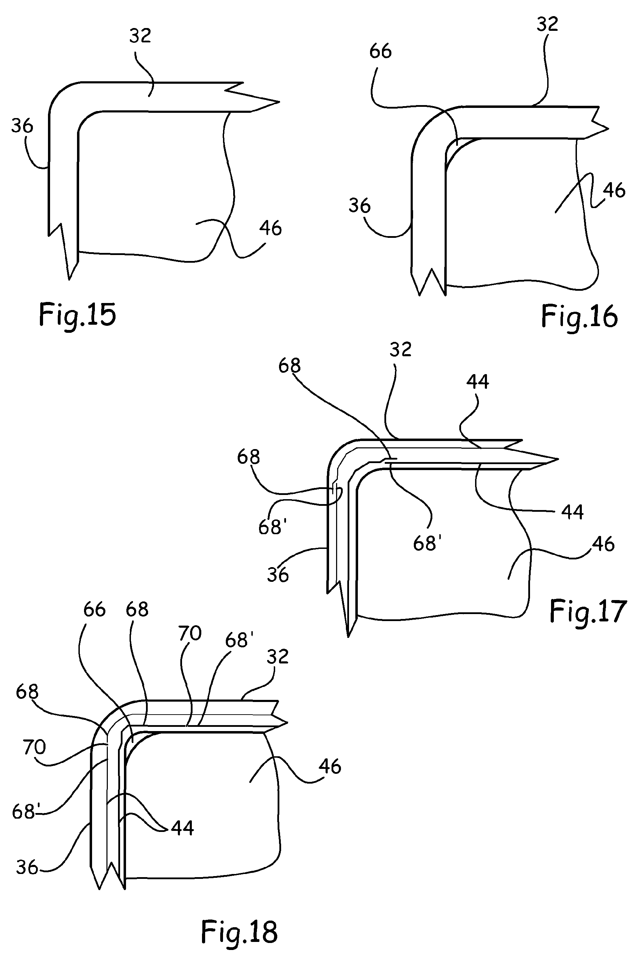

Sur la figure 15, on a représenté une partie d'une préforme de renforts fibreux au niveau d'une zone reliant un panneau et un longeron avant compactage.

Sur la figure 16, on a représenté la même partie après compactage, le mandrin 46 étant expansé au niveau du rayon de courbure. Cet agencement permet de limiter l'apparition d'ondulations susceptibles d'impacter les caractéristiques mécaniques du caisson au niveau des rayons de courbure lors du compactage.

Selon un mode de réalisation, les moyens 66 d'expansion du mandrin peuvent se présenter sous la forme d'une vessie gonflable intercalée entre le mandrin et les renforts fibreux. Toutefois, d'autres solutions peuvent être envisagées pour obtenir l'expansion du mandrin au niveau d'un ou des rayons de courbure.

Selon une autre caractéristique de l'invention, les renforts fibreux 44 disposés à 90° par rapport à l'axe Y sont coupés à proximité d'une zone reliant un panneau et un longeron. Dans la mesure où les renforts fibreux sont inextensibles, cet agencement permet d'éviter de bloquer la dilatation ou l'expansion du mandrin.

Avantageusement, les portions 68, 68' d'un renfort fibreux disposées de part et d'autre d'une coupure 70 sont superposées lors de la mise en place dudit renfort fibreux comme illustré sur la figure 17. La longueur de la superposition est ajustée de manière à ce qu'après le compactage, l'expansion du mandrin et la déformation du rayon de courbure, les portions 68, 68' se retrouvent bout à bout, comme illustré sur la figure 18, avec un espacement acceptable.

Au niveau d'un rayon de courbure, les superpositions sont décalées d'un pli à l'autre de manière à répartir les coupures 70 afin de ne pas avoir un affaiblissement localisé dans la structure du caisson central de voilure comme illustré sur les figures 17 et 18.

## Revendications

1. Procédé de réalisation d'un caisson central de voilure comportant un panneau supérieur (32), un panneau inférieur (34), un longeron avant (36) et un longeron arrière (38), les bords supérieurs desdits longerons (36, 38) approximativement parallèles à un axe Y étant reliés par le panneau supérieur (32) et les bords inférieurs desdits longerons (36, 38) approximativement parallèles à l'axe y étant reliés par le panneau inférieur (34), **caractérisé en ce qu'**il consiste à réaliser au moins un panneau et au moins un longeron en matériau composite d'un seul tenant.

2. Procédé de réalisation d'un caisson central de voilure selon la revendication 1, **caractérisé en ce que** les deux panneaux et les deux longerons sont réalisés d'un seul tenant.

3. Procédé de réalisation d'un caisson central de voilure selon la revendication 1 ou 2, **caractérisé en ce qu'**il est réalisé par enroulement d'au moins un renfort fibreux (44) autour de l'axe Y sur un mandrin (46).

4. Procédé de réalisation d'un caisson central de voilure selon la revendication 3, ledit caisson central comportant au niveau des surfaces intérieures des raidisseurs parallèles à l'axe Y, **caractérisé en ce qu'**il consiste à déposer des renforts fibreux sur des mandrins (58) dits amovibles de manière à obtenir pour chaque mandrin amovible un profilé en U, à rapporter les mandrins amovibles (58) sur un mandrin principal (56) en accolant les profilés en U de façon à ce que les deux branches de deux profilés en U adjacents forment un raidisseur, puis à enrouler au moins un renfort fibreux (44) autour de l'axe Y.

5. Procédé de réalisation d'un caisson central de voilure selon la revendication 3 ou 4, **caractérisé en ce que** le mandrin (46) ou le mandrin principal (56) est étanche et s'étend de part et d'autre du caisson central de voilure de manière à offrir de part et d'autre du caisson une surface de contact à une enveloppe étanche (62) permettant de définir avec le mandrin ou le mandrin principal une enceinte hermétique.

6. Procédé de réalisation d'un caisson central de voilure selon la revendication 5, **caractérisé en ce qu'**il consiste à disposer entre les éléments fibreux formant le caisson central de voilure et la vessie (62) au moins une tôle de lissage comportant au moins deux parties reliées par une articulation autorisant un mouvement de rotation relatif entre lesdites deux parties selon un axe de rotation parallèle à l'axe Y.

7. Procédé de réalisation d'un caisson central de voilure selon l'une quelconque des revendications 3 à 6, **caractérisé en ce que** le mandrin (46) comprend des moyens (66) pour l'expanser au niveau d'au moins un rayon de courbure de manière à accroitre le périmètre dudit mandrin lors du compactage des renforts fibreux constituant le caisson central de voilure.

8. Procédé de réalisation d'un caisson central de voilure selon l'une quelconque des revendications 3 à 7, **caractérisé en ce que** les renforts fibreux (44) disposés à 90° par rapport à l'axe Y sont coupés à proximité d'une zone reliant un panneau et un longeron.

9. Procédé de réalisation d'un caisson central de voilure selon la revendication 8, **caractérisé en ce que** les portions (68, 68') d'un renfort fibreux disposées de part et d'autre d'une coupure (70) sont superposées lors de la mise en place dudit renfort fibreux, la longueur de la superposition étant ajustée de manière à ce qu'après le compactage, les portions (68, 68') se retrouvent bout à bout.

10. Procédé de réalisation d'un caisson central de voilure selon la revendication 9, **caractérisé en ce qu'**au niveau d'un rayon de courbure, les superpositions sont décalées d'un pli à l'autre de manière à répartir les coupures (70).

## Patentansprüche

1. Verfahren zur Herstellung eines zentralen Flügelkastens mit einer oberen Platte (32), einer unteren Platte (34), einem vorderen Träger (36) und einem hinteren Träger (38), wobei die oberen Ränder der Träger (36, 38), die näherungsweise parallel zu einer Achse Y sind, durch die obere Platte (32) verbunden sind und die unteren Ränder der Träger (36, 38), die ungefähr parallel zur Achse Y sind, durch die untere Platte (34) verbunden sind, **dadurch gekennzeichnet, dass** dieses darin besteht, wenigstens eine Platte und wenigstens einen Träger in einem Stück aus Verbundmaterial herzustellen.

2. Verfahren zur Herstellung eines zentralen Flügelkastens nach Anspruch 1, **dadurch gekennzeichnet, dass** die beiden Platten und die beiden Träger aus einem Stück hergestellt werden.

3. Verfahren zur Herstellung eines zentralen Flügelkastens nach Anspruch 1 oder 2, **dadurch gekennzeichnet, dass** dieses durch Wickeln wenigstens einer Faserverstärkung (44) auf einen Kern (46) um die Achse Y bewerkstelligt wird.

4. Verfahren zur Herstellung eines zentralen Flügelkastens nach Anspruch 3, wobei der zentrale Kasten im Bereich der inneren Oberfläche zur Achse Y parallele Versteifungen aufweist, **dadurch gekennzeichnet, dass** dieses darin besteht Faserverstärkungen auf sogenannten umsetzbaren Kernen (58) derart aufzubringen, dass für jeden umsetzbaren Kern ein U-Profil erhalten wird, die umsetzbaren Kerne (58) an einen Kern (56) anzusetzen, wobei die U-Profile derart aneinander gefügt werden, dass die beiden Schenkel von zwei benachbarten U-Profilen eine Versteifung bilden, und wenigstens eine Faserverstärkung (44) um die Achse Y aufzuwickeln.

5. Verfahren zur Herstellung eines zentralen Flügelkastens nach Anspruch 3 oder 4, **dadurch gekennzeichnet, dass** der Kern (46) oder der Hauptkern (56) dicht ist und sich beidseits des zentralen Flügelkastens derart erstreckt, dass er beidseits des Kastens eine Kontaktfläche für eine dichte Hülle (62) bietet, die es gestattet, zusammen mit dem Kern oder dem Hauptkern eine hermetische Hülle zu bilden.

6. Verfahren zur Herstellung eines zentralen Flügelkastens nach Anspruch 5, **dadurch gekennzeichnet, dass** dieses darin besteht, zwischen den Faserelementen, die den zentralen Flügelkasten bilden, und der Blase (62) wenigstens ein Glättungsblech anzuordnen, das wenigstens zwei Teile aufweist, die durch ein Gelenk verbunden sind, das zwischen den beiden Teilen eine Drehbewegung um eine Drehachse ermöglicht, die parallel zur Achse Y ist.

7. Verfahren zur Herstellung eines zentralen Flügelkastens nach einem der Ansprüche 3 bis 6, **dadurch gekennzeichnet, dass** der Kern (46) Mittel (66) aufweist, um diesen im Bereich wenigstens eines Krümmungsradius derart zu erweitern, dass der Umfang des Kerns bei der Verdichtung der Faserverstärkungen, die den zentralen Flügelkasten bilden, vergrößert wird.

8. Verfahren zur Herstellung eines zentralen Flügelkastens nach einem der Ansprüche 3 bis 7, **dadurch gekennzeichnet, dass** die in 90° bezüglich der Achse Y angeordneten Faserverstärkungen (44) in der Nähe eines Bereichs unterbrochen sind, der eine Platte und einen Träger verbindet.

9. Verfahren zur Herstellung eines zentralen Flügelkastens nach Anspruch 8, **dadurch gekennzeichnet, dass** die Abschnitte (68, 68') einer Faserverstärkung, die beidseits einer Unterbrechung (70) angeordnet sind, beim Anordnen der Faserverstärkung übereinandergelegt werden, wobei die Länge der Überlappung derart eingestellt wird, dass nach der Verdichtung die Abschnitte (68, 68') stumpf aufeinander treffen.

10. Verfahren zur Herstellung eines zentralen Flügelkastens nach Anspruch 9, **dadurch gekennzeichnet, dass** im Bereich eines Krümmungsradius die Überlappungen um die Biegung herum untereinander versetzt sind, um die Unterbrechungen (70) zu verteilen.

## Claims

1. Method for producing a central wing box having an upper panel (32), a lower panel (34), a front spar (36) and a rear spar (38), the upper edges of said spars (36, 38) approximately parallel to an axis Y being connected by the upper panel (32) , and the lower edges of said spars (36, 38) approximately parallel to the axis Y being connected by the lower panel (34), **characterized in that** it consists of producing at least one panel and at least one spar from composite material in one piece.

2. Method for producing a central wing box as claimed in Claim 1, **characterized in that** the two panels and the two spars are produced in one piece.

3. Method for producing a central wing box as claimed in Claim 1 or 2, **characterized in that** is produced by wrapping of at least one fiber reinforcement (44) about the axis Y on a mandrel (46).

4. Method for producing a central wing box as claimed in Claim 3, the said central box having stiffeners parallel to the axis Y in the region of the internal surfaces, **characterized in that** it consists of depositing fiber reinforcements on mandrels (58) said removable mandrels in such a way as to obtain a U-shaped profile for each removable mandrel, to join the removable mandrels (58) onto a main mandrel (56) by attaching the U-shaped profiles in such a way that the two arms of two adjacent U-shaped profiles form a stiffener, then to wrap at least one fiber reinforcement (44) around of the axis Y.

5. Method for producing a central wing box as claimed in Claim 3 or 4, **characterized in that** the mandrel (46) or the main mandrel (56) is leakproof and extends on either side of this latter in such a way as to offer a surface on either side for contact with a leakproof space (62) that makes it possible to define a hermetically sealed space with the mandrel or the main mandrel.

6. Method for producing a central wing box as claimed in Claim 5, **characterized in that** it consists of disposing between the fibrous elements forming the central wing box and the bladder (62) at least one smoothing plate comprising at least two parts connected by an articulated joint permitting a relative rotary movement between the said two parts along an axis of rotation parallel to the axis Y.

7. Method for producing a central wing box as claimed in any one of Claims 3 to 6, **characterized in that** the mandrel (46) comprises means (66) for expanding it in the region of at least one radius of curvature in such a way as to increase the perimeter of the said mandrel during compacting of the fiber reinforcements constituting the central wing box.

8. Method for producing a central wing box as claimed in any one of Claims 3 to 7, **characterized in that** the fiber reinforcements (44) disposed at 90° relative to the axis Y are cut near to a zone connecting a panel and a spar.

9. Method for producing a central wing box as claimed in Claim 8, **characterized in that** the portions (68, 68') of a fiber reinforcement disposed on either side of a cut (70) are superimposed during the positioning of the said fiber reinforcement, the length of the superimposition being adjusted in such a way that, after compacting, the portions (68, 68') are again positioned end to end.

10. Method for producing a central wing box as claimed in Claim 9, **characterized in that** in the region of a radius of curvature, the superimpositions are offset from one ply to the other in such a way as to distribute the cuts (70).
